# EUROPÄISCHE PATENTSCHRIFT

(11) **EP 1 208 321 B1**
(45) Veröffentlichungstag und Bekanntmachung des Hinweises auf die Patenterteilung: **17.11.2004**
(21) Anmeldenummer: 01949215.6
(22) Anmeldetag: 30.05.2001
(51) Int. Cl.: F16K 31/00, F02M 59/46, F02M 47/00

(54) **VENTIL ZUM STEUERN VON FLÜSSIGKEITEN**
VALVE FOR CONTROLLING LIQUIDS
SOUPAPE POUR REGULER LE DEBIT DE LIQUIDES

(30) Priorität: 09.06.2000 DE 10028768
(43) Veröffentlichungstag der Anmeldung: 29.05.2002
(73) Patentinhaber: ROBERT BOSCH GMBH, 70442 Stuttgart (DE)
(72) Erfinder: SCHUERG, Stefan, 71636 Ludwigsburg (DE); SCHAICH, Udo, 70188 Stuttgart (DE)
(86) Internationale Anmeldenummer: PCT/DE2001/002039
(87) Internationale Veröffentlichungsnummer: WO 2001/094821

(56) Entgegenhaltungen:
- DE-A- 19 744 235
- DE-A- 19 803 842
- US-A- 4 858 439

## Beschreibung

### Stand der Technik

Die vorliegende Erfindung betrifft ein Ventil zum Steuern von Flüssigkeiten gemäß der Gattung des Patentanspruchs 1.

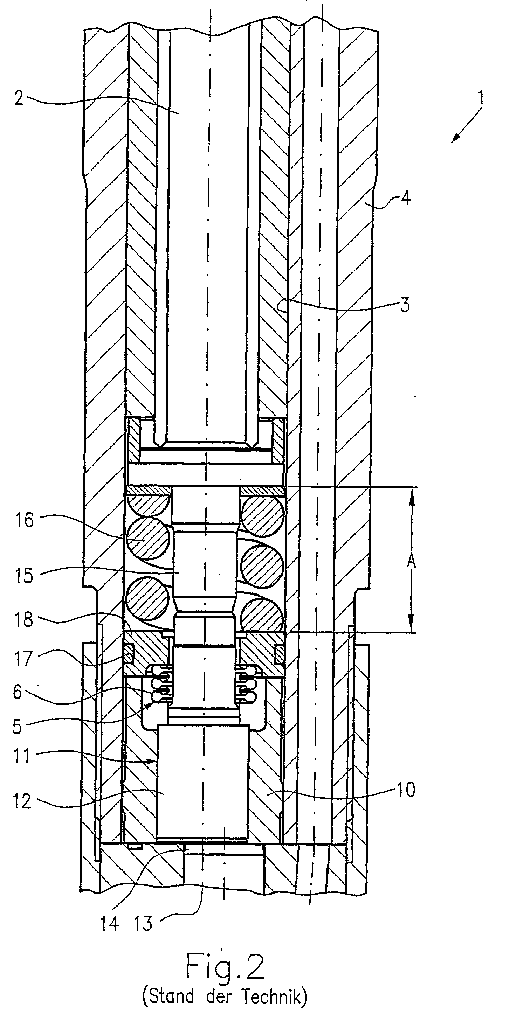

In Figur 2 ist ein Ventil zum Steuern von Flüssigkeiten gemäß dem Stand der Technik dargestellt. Das Ventil 1 umfaßt ein Gehäuse 4, in welchem eine Aktorbohrung 3 zur Aufnahme eines Piezoaktors 2 vorhanden ist. Der Piezoaktor 2 ist über einen Betätigungskolben 15 mit einem hydraulischen Übersetzer 11 verbunden. Der hydraulische Übersetzer 11 besteht aus einem ersten Kolben 12, einem zweiten Kolben 13 und einem zwischen den beiden Kolben angeordneten, mit Fluid gefüllten Druckraum 14. Zur Rückstellung des Piezoaktors 2 ist weiter eine Rückstellfeder 16 vorgesehen. Zur Abdichtung des Aktormoduls gegenüber dem hydraulischen Übersetzer sind ein O-Ring 17 sowie ein Metallbalg 5 vorgesehen. Der O-Ring 17 ist in einer ringförmigen Aussparung einer Scheibe 18 angeordnet und dichtet das Aktormodul an der Aktorbohrung 3 ab. Der Metallbalg 5 ist an seinem einen Ende mit dem Betätigungskolben 15 verbunden und mit seinem anderen Ende mit einer Innenbohrung der Scheibe 18 verbunden. Dadurch dichtet der Metallbalg 5 das Aktormodul im Bereich des Betätigungskolbens ab.

An dem aus dem Stand der Technik bekannten Ventil 1 ist jedoch nachteilig, daß der O-Ring 17 bei der Montage des Ventils an der Einführkante beschädigt werden kann. Weiter dichtet der O-Ring 17 das Aktormodul nicht hundertprozentig ab. Weiterhin kann die durch den O-Ring bereitgestellte Dichtheit nicht überprüft werden. Außerdem kann es über die Einführstrecke des O-Rings in die Aktorbohrung dazu kommen, daß sich der O-Ring verdrillt, beziehungsweise verdreht, was Undichtigkeiten nach sich ziehen kann. Auf Grund des relativ begrenzten Bauraums kann die Aktorfeder nur mit wenigen Windungen ausgeführt werden. Dies kann zur Folge haben, daß sich die Feder schief zu einer Mittelachse des Ventils stellt und somit die Krafteinleitung auf den Aktor exzentrisch erfolgt. Dadurch kann es zu einem schnellen Verschleiß des Ventils kommen.

Ein Ventil gemäß dem Oberbegriff des Patentanspruchs 1 ist aus DE 197 44 235 A bekannt. Dieses Dokument, das als nächstliegender Stand der Technik angeschen wird, beschreibt einen Piezoaktor, welcher in einem Kapsel (Balg) angeordnet ist. Die Kapsel ist in einem Aktorbohrung angeordnet und dient als Kolben eines hydraulischen Übersetzers.

### Vorteile der Erfindung

Das erfindungsgemäße Ventil zum Steuern von Flüssigkeiten mit den Merkmalen des Patentanspruchs 1 hat demgegenüber den Vorteil, daß es zur Abdichtung keinen O-Ring mehr benötigt. Die Abdichtung des Aktormoduls gegenüber dem hydraulischen Übersetzer wird dabei derart erreicht, daß ein Balg fest mit dem Aktor und der Aktorbohrung verbunden ist. Durch diese erfindungsgemäße Ausgestaltung können sowohl der O-Ring, als auch die Scheibe, in welcher die Nut für den O-Ring vorgesehen ist, entfallen. Somit wird die Anzahl der Bauteile verringert und das erfindungsgemäße Ventil kann einfacher und kostengünstiger hergestellt werden. Durch das Wegfallen der Scheibe wird weiter noch zusätzlicher Bauraum gewonnen, beziehungsweise das erfindungsgemäße Ventil kann kompakter aufgebaut sein. Insbesondere bei einer Verwendung des Ventils als Einspritzventil für einen Motor ist dies ein großer Vorteil, da im Motorraum das Platzangebot nur begrenzt ist und das Ventil somit ohne Änderungen in unterschiedliche Motoren verschiedenster Hersteller eingebaut werden kann.

Um eine einfache Montage zu ermöglichen und einen möglichst variablen Einbau des Balges in das Ventil bereitzustellen, weist der Balg vorzugsweise einen hülsenartigen Fortsatz auf, welcher mit der Aktorbohrung fest verbindbar ist.
Der Balg kann somit entsprechend der Länge des hülsenartigen Fortsatzes direkt an der Innenseite der Aktorbohrung entlang geführt werden und an einer beliebigen Stelle an der Aktorbohrung befestigt werden.

Um eine einfache und kostengünstige Herstellung des erfindungsgemäßen Ventils bereitzustellen, ist die Verbindung zwischen dem Balg und dem Aktor beziehungsweise die Verbindung zwischen der Aktorbohrung und dem Balg als Schweißverbindung ausgebildet. Insbesondere vorteilhaft wird hierbei die Verbindung als eine ringförmige Schweißverbindung ausgebildet. Dies ermöglicht es auch, nach dem Vorgang des Schweißens die Dichtheit zwischen Balg und Aktor einerseits, sowie zwischen Balg und Aktorbohrung andererseits zu überprüfen. Dadurch wird eine lange Lebensdauer des erfindungsgemäßen Ventils sichergestellt.

Gemäß einer weiteren vorteilhaften Ausgestaltung der vorliegenden Erfindung ist der hülsenartige Fortsatz des Balgs mittels eines Preßsitzes eines Haltekörpers fest mit der Aktorbohrung verbunden. Dadurch ist der hülsenartige Fortsatz zwischen der Wand der Aktorbohrung und dem Haltekörper angeordnet. Hierbei kann der Haltekörper auch dafür vorgesehen sein, zumindest teilweise den hydraulischen Übersetzer des Ventils aufzunehmen. Aufgrund des ringförmigen Preßsitzes des Haltekörpers tritt somit eine teilweise Verformung des hülsenartigen Fortsatzes des Balgs auf, so daß dieser abdichtend von seiner Oberseite zu seiner Unterseite an der Aktorbohrung anliegt. Gleichzeitig wird dadurch der Haltekörper im Ventil positioniert. Dadurch kann auf die Schweißstelle zwischen dem hülsenartigen Fortsatz des Balgs und der Aktorbohrung verzichtet werden.

Um einen ausreichenden Axialhub des Aktors aufzunehmen, weist der Balg vorzugsweise drei Wellen auf. Die Anzahl der Wellen kann jedoch entsprechend der benötigten Länge des Axialhubes größer oder kleiner sein.

Um eine ausreichende Lebensdauer aufzuweisen, ist der Balg vorzugsweise aus Metall hergestellt.

Um eine Schiefstellung der Rückstellungsfeder für den Aktor und eine exzentrische Krafteinleitung durch die Feder zu verhindern, weist die Rückstellfeder vorzugsweise mindestens vier Windungen auf. Die Windungen sind vorteilhaft derart ausgestaltet, daß sie an der Aktorbohrung anliegen, ohne jedoch einen großen Betrag an Reibung zu erzeugen.

### Zeichnung

Ein Ausführungsbeispiel der vorliegenden Erfindung ist in der Zeichnung dargestellt und in der nachfolgenden Beschreibung näher erläutert. Es zeigen:
Figur 1 ein Ventil zum Steuern von Flüssigkeiten gemäß einem Ausführungsbeispiel der vorliegenden Erfindung und
Figur 2 ein Ventil zum Steuern von Flüssigkeiten gemäß dem Stand der Technik.

### Beschreibung des Ausführungsbeispiels

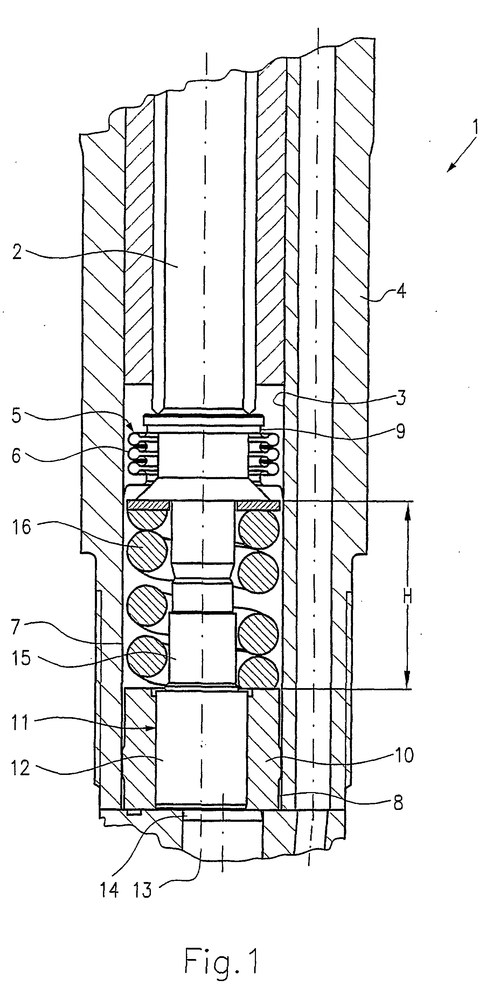

In Figur 1 ist ein Ausführungsbeispiel eines Ventils zum Steuern von Flüssigkeiten gemäß der vorliegenden Erfindung dargestellt. Beispielsweise kann das dargestellte Ventil als Kraftstoffeinspritzventil oder als Steuerventil für ein Kraftstoffeinspritzventil verwendet werden.

Das Ventil 1 umfaßt einen Piezoaktor 2, welcher in einer in einem Gehäuse 4 des Ventils vorgesehenen Aktorbohrung 3 angeordnet ist. Der Piezoaktor 2 steht über einen einstückig ausgebildeten, abgestuften Betätigungskolben 15 mit einem hydraulischen Übersetzer 11 in Verbindung. Der hydraulische Übersetzer 11 umfaßt einen ersten Kolben 12, einen zweiten Kolben 13, der versetzt zum ersten Kolben 12 angeordnet ist, sowie einen zwischen den beiden Kolben befindlichen Druckraum 14.

Wie in Figur 1 gezeigt, ist eine Rückstellfeder 16 zur Rückstellung des Piezoaktors 2 um den Betätigungskolben 15 herum angeordnet.

Zur Abdichtung des Aktormoduls gegenüber dem Modul des hydraulischen Übersetzers ist ein Metallbalg 5 vorgesehen, welcher drei Wellen 6 sowie einen hülsenartigen Teil 7 aufweist. Das Ende des mit den Wellen 6 versehenen Teils des Metallbalgs 5 ist mit dem Kopf des Aktors 2 verschweißt, so daß eine Abdichtung durch die ringförmige Schweißverbindung 9 sichergestellt ist.

Wie weiter in Figur 1 gezeigt, ist das Ende des hülsenartigen Teils 7 des Metallbalgs 5 durch eine ringförmige Schweißverbindung 8 mit dem Inneren der Aktorbohrung 3 fluiddicht verbunden. Somit stellt der Metallbalg 5 durch die beiden Schweißverbindungen 8 und 9 eine fluiddichte Abdichtung zwischen dem Aktormodul und dem Modul des hydraulischen Übersetzers bereit. Zur Aufnahme des ersten Kolbens 12 des hydraulischen Übersetzers 11 ist in dem unteren Bereich des hülsenartigen Teils 7 ein Haltekörper 10 im Inneren des hülsenartigen Teils 7 befestigt. Die Feder 16 stützt sich mit einem Ende gegen diesen Haltekörper 10 ab.

Wenn nun der Piezoaktor 2 betätigt wird, bewegt er sich in Axialrichtung des Ventils 1 und drückt entgegen der Federkraft der Feder 16 über den Betätigungskolben 15 auf den ersten Kolben 12 des hydraulischen Übersetzers. Dabei nehmen die Wellen 6 des Metallbalgs 5 den Axialhub des Piezoaktors 2 auf. Nach Beendigung des Hubs wird der Piezoaktor 2 wieder durch die Feder 16 in seine Ausgangsposition zurückgestellt, wobei auch der Metallbalg 5 seine ursprüngliche Position wieder einnimmt.

Wie ein Vergleich zwischen dem in Figur 1 dargestellten erfindungsgemäßen Ventil und dem in Figur 2 gezeigten Ventil gemäß dem Stand der Technik zeigt, weist das erfindungsgemäße Ventil einen Bauraum für die Feder 16 von der Höhe H auf, wohingegen das Ventil gemäß dem Stand der Technik einen deutlich kleineren Bauraum für die Feder 16 mit der Höhe A aufweist, welche deutlich kleiner als die Höhe H ist. Dadurch ist es erfindungsgemäß möglich, daß die Feder 16 eine zusätzliche Windung aufweist, wodurch die Gefahr, daß sich die Feder 16 schief stellt und eine exzentrische Kräfteeinleitung auftritt, deutlich verringert wird. Da durch die Verbindung des Metallbalgs 5 mit dem Piezoaktor 2 und der Bohrung 3 für den Aktor auch die Teilezahl verringert wird, da auf den O-Ring und die Scheibe im Stand der Technik verzichtet werden kann, ist das erfindungsgemäße Ventil deutlich einfacher ausgebildet. Dadurch können auch die Herstellungskosten verringert werden.

Zusammenfassend wurde insoweit ein Ventil zum Steuern von Flüssigkeiten beschrieben, welches einen Piezoaktor 2 aufweist, der in einer Aktorbohrung 3 angeordnet ist. Weiter ist ein hydraulischer Übersetzer 11 sowie ein Balg 5 vorgesehen. Der Balg 5 ist derart ausgebildet, daß er den Axialhub des Piezoaktors 2 aufnehmen kann. Hierbei ist der Balg 5 fest mit dem Piezoaktor 2 verbunden und auch fest mit der Aktorbohrung 3 verbunden. Dies gewährleistet eine fluiddichte Abdichtung des Aktormoduls gegenüber den anderen Bereichen des Ventils.

## Patentansprüche

1. Ventil zum Steuern von Flüssigkeiten mit einem Piezoaktor (2), welcher in einer Aktorbohrung (3) angeordnet ist einem hydraulischen Übersetzer (11) und einem Balg (5) zur Aufnahme eines Axialhubs des Piezoaktors (2), **dadurch gekennzeichnet, daß** der hydraulische Übersetzer aus einem ersten, von einem Kopf des Piezoaktors (2) verstellbaren Kolben und einem zweiten Kolben besteht, und das eine Ende des Balges (5) fest und dicht mit dem Kopf des Piezoaktors (2) und das andere Ende fest und dicht mit der Aktorbohrung (3) verbunden ist.

2. Ventil zum Steuern von Flüssigkeiten nach Anspruch 1, **dadurch gekennzeichnet, daß** der Balg (5) einen hülsenartigen Fortsatz (7) aufweist, welcher mit der Aktorbohrung (3) fest verbunden ist.

3. Ventil zum Steuern von Flüssigkeiten nach Anspruch 1 oder 2, **dadurch gekennzeichnet, daß** die Verbindung zwischen dem Balg (5) und dem Piezoaktor (2) und/oder die Verbindung zwischen dem Balg (5) und der Aktorbohrung (3) als Schweißverbindung ausgebildet ist.

4. Ventil zum Steuern von Flüssigkeiten nach Anspruch 1 oder 2, **dadurch gekennzeichnet, daß** der hülsenartige Fortsatz (7) des Balg (5) über einen Preßsitz eines Haltekörpers (10) fest mit der Aktorbohrung (3) verbunden ist.

5. Ventil zum Steuern von Flüssigkeiten nach Anspruch 4 **dadurch gekennzeichnet, daß** der Haltekörper (10) zumindest teilweise den hydraulischen Übersetzer (11) aufnimmt.

6. Ventil zum Steuern von Flüssigkeiten nach einem der Ansprüche 1 bis 5, **dadurch gekennzeichnet, daß** der Balg (5) mit drei Wellen (6) gebildet ist.

7. Ventil zum Steuern von Flüssigkeiten nach einem der Ansprüche 1 bis 6, **dadurch gekennzeichnet, daß** der Balg (5) aus Metall hergestellt ist.

8. Ventil zum Steuern von Flüssigkeiten nach einem der Ansprüche 1 bis 7, **dadurch gekennzeichnet, daß** eine Aktorfeder (16) mindestens vier Windungen aufweist, welche an die Aktorbohrung (3) angelegt sind.

## Claims

1. Valve for controlling liquids having a piezo-actuator (2) which is arranged in an actuator bore (3), a hydraulic transformer (11) and a bellows (5) for absorbing an axial travel of the piezo-actuator (2) **characterized in that** the hydraulic transformer is composed of a first piston, which can be adjusted by a head of the piezo-actuator (2) and a second piston, and the one end of the bellows (5) is connected in a secure and sealed fashion to the head of the piezo-actuator (2), and the other end is connected in a secure and sealed fashion to the actuator bore (3).

2. Valve for controlling liquids according to Claim 1, **characterized in that** the bellows (5) has a sleeve-like projection (7) which is securely connected to the actuator bore (3).

3. Valve for controlling liquids according to Claim 1 or 2, **characterized in that** the connection between the bellows (5) and the piezo-actuator (2) and/or the connection between the bellows (5) and the actuator bore (3) are/is embodied as a welded connection.

4. Valve for controlling liquids according to Claim 1 or 2, **characterized in that** the sleeve-like projection (7) of the bellows (5) is securely connected to the actuator bore (3) via a form fit of a securing element (10).

5. Valve for controlling liquids according to Claim 4, **characterized in that** the securing element (10) at least partially accommodates the hydraulic transformer (11).

6. Valve for controlling liquids according to one of Claims 1 to 5, **characterized in that** the bellows (5) is formed with three corrugations (6).

7. Valve for controlling liquids according to one of Claims 1 to 6, **characterized in that** the bellows (5) is manufactured from metal.

8. Valve for controlling liquids according to one of Claims 1 to 7, **characterized in that** an actuator spring (16) has at least four turns which are applied to the actuator bore (3).

## Revendications

1. Soupape de commande de liquides comprenant un piézoactionneur (2), qui est disposé dans un alésage (3), un convertisseur hydraulique (11) et un soufflet (5) destiné à recevoir une course axiale du piézoactionneur (2),
**caractérisée en ce que**
le convertisseur hydraulique se compose d'un premier piston réglé par une tête du piézoactionneur (2) et d'un deuxième piston, et une première extrémité du soufflet (5) est assemblée de façon solide et étanche à la tête du piézoactionneur (2) et l'autre extrémité est assemblée de façon solide et étanche à l'alésage d'actionneur (3).

2. Soupape selon la revendication 1,
**caractérisée en ce que**
le soufflet (5) présente un prolongement en forme de douille (7), qui est solidement assemblé à l'alésage (3) de l'actionneur.

3. Soupape pour réguler le débit de liquides selon la revendication 1 ou 2,
**caractérisée en ce que**
l'assemblage entre le soufflet (5) et le piézoactionneur (2) et/ou l'assemblage entre le soufflet (5) et l'alésage (3) est un assemblage soudé.

4. Soupape selon la revendication 1 ou 2,
**caractérisée en ce que**
le prolongement en forme de douille (7) du soufflet (5) est solidement assemblé à l'alésage (3) par un ajustement serré d'un corps de maintien (10).

5. Soupape selon la revendication 4,
**caractérisée en ce que**
le corps de maintien (10) contient au moins en partie le convertisseur hydraulique (11).

6. Soupape selon l'une quelconque des revendications 1 à 5,
**caractérisée en ce que**
le soufflet (5) est formé de trois ondulations (6).

7. Soupape selon l'une quelconque des revendications 1 à 6,
**caractérisée en ce que**
le soufflet (5) est fabriqué en métal.

8. Soupape selon l'une quelconque des revendications 1 à 7,
**caractérisée en ce qu'**
un ressort d'actionneur (16) présente au moins quatre spires, appliquées sur l'alésage (3).
